# EUROPÄISCHE PATENTSCHRIFT

(11) **EP 2 792 985 B1**
(45) Veröffentlichungstag und Bekanntmachung des Hinweises auf die Patenterteilung: **26.11.2014**
(21) Anmeldenummer: 13002055.5
(22) Anmeldetag: 18.04.2013
(51) Int. Cl.: F27B 5/04, A61C 13/20, B22F 3/00, F27B 5/06, F27B 17/02, F27D 7/02

(54) **Sintervorrichtung**
Sintering device
Dispositif de frittage

(43) Veröffentlichungstag der Anmeldung: 22.10.2014
(73) Patentinhaber: Amann Girrbach AG, 6842 Koblach (AT)
(72) Erfinder: Reichert, Axel, 9443 Widnau (CH)
(74) Vertreter: Fechner, Thomas

(56) Entgegenhaltungen:
- DE-U1-202011 106 734

## Beschreibung

Die Erfindung betrifft eine Sintervorrichtung zum Sintern zumindest eines, insbesondere dentalen, Werkstücks mit einem Sinterhohlraum zur Aufnahme des zu sinternden Werkstücks während des Sintervorgangs, wobei der Sinterhohlraum von einer Basisfläche der Sintervorrichtung begrenzt ist, auf der das Werkstück während des Sintervorgangs ablegbar ist, wobei die Sintervorrichtung zumindest eine Gaszuführung zur Einleitung von Schutzgas in den Sinterhohlraum aufweist. Weiters betrifft die Erfindung auch ein Verfahren zum Sintern zumindest eines, insbesondere dentalen, Werkstücks in einer Sintervorrichtung sowie eine Anordnung mit zumindest einem zu sinternden, insbesondere dentalen, Werkstück und einer Sintervorrichtung.

Für die Sinterung von, insbesondere dentalen, Werkstücken sind beim Stand der Technik bereits verschiedenste Sintervorrichtungen vorgeschlagen worden. Die DE 20 2011 106 734 U1 offenbart eine Sinterkammer bei der mittels des Venturi-Effektes im oberen Bereich eines Sinterraumes ein leichter Unterdruck erzeugt werden soll. In der DE 20 2011 005 465 U1 wird z.B. vorgeschlagen, die zu sinternden Werkstücke in einer ringförmigen Sinterschale vollständig in einem Sintergranulat zu versenken, sodass das Sintergranulat die zu sinternden Werkstücke beim Sintervorgang vollständig umgibt und bedeckt. Die Praxis hat gezeigt, dass es bei dieser Anordnung zu einer Behinderung des beim Sintervorgangs auftretenden Schrumpfvorgangs des Werkstücks kommen kann, was zu einer ungewollten Verformung des Werkstücks führt. Eine gattungsgemäße Sintervorrichtung ist z.B. auch in der WO 2011/020688 A1 offenbart. In dieser Schrift wird vorgeschlagen, eine Quarzschale, welche die Basisfläche aufweist, im Betrieb der Sintervorrichtung mit innerten Kügelchen zu füllen, in die das Sintergut eingelegt wird. Das Schutzgas muss, um in die Quarzschale, also in die Umgebung des zu sinternden Werkstücks zu gelangen, die Quarzschale umströmen, um von oben in das Innere der Quarzschale zu gelangen. Es hat sich gezeigt, dass bei dieser Art der Anordnung während des Sintervorgangs eine relativ große Menge an Schutzgas verbraucht wird und es trotzdem zu Beeinträchtigungen des Sinterguts durch Reste von anderem Gas, insbesondere Sauerstoff, kommen kann.

In der DE 10 2011 056 211 wird vorgeschlagen, die Schale in der sich das Sintergut befindet, mittels eines Verschlusselements abzudecken, wobei die abgedeckte Schale von Schutzgas bzw. Innertgas durchströmbar ist. In dieser Schrift wird allerdings nicht dargelegt, wie diese Durchströmbarkeit der abgedeckten Schale ausgeführt sein soll.

Bei der DE 10 2009 019 041 A1 geht es um eine Sintervorrichtung zum Sintern von Magnesium bzw. Magnesiumlegierungen bei relativ geringen Sintertemperaturen von 600° C bis 642° C unter einer Schutzgasatmosphäre. In Fig. 5 dieser Schrift wird vorgeschlagen, etwaige Verunreinigungen des Gases im Außentiegelbereich durch Gettermaterial hindurchzuleiten, bevor diese Verunreinigung in den Innentiegelbereich gelangen können.

Umfangreiche Versuche mit verschiedensten Sintervorrichtungen haben gezeigt, dass auch geringe Änderungen im Aufbau gattungsgemäßer Anordnungen und Sintervorrichtungen, insbesondere bei sehr hohen Sintertemperaturen von z.T. über 1200 ° C, oft einen unerwartet starken Einfluss auf die Qualität des Sinterergebnisses haben können. Insbesondere ist es mit beim Stand der Technik bekannten Anordnungen schwierig, sicherzustellen, dass keine unerwünschte Verfärbung oder Oxidation des zu sinternden Werkstücks auftritt.

Aufgabe der Erfindung ist es, eine gattungsgemäße Sintervorrichtung dahingehend weiter zu verbessern, dass sie einerseits möglichst einfach aufgebaut sein kann und andererseits unerwünschte negative Beeinflussungen des Sinterguts beim Sintergut möglichst vermeidet.

Eine erfindungsgemäße Sintervorrichtung sieht hierzu vor, dass die Gaszuführung auf der dem Sinterhohlraum entgegen gesetzten Seite der Basisfläche angeordnet ist und die Basisfläche zur Einleitung des von der Gaszuführung kommenden Schutzgases in den Sinterhohlraum zumindest einen für das Schutzgas durchlässigen Durchströmbereich aufweist.

Es ist somit in anderen Worten vorgesehen, dass die Basisfläche selbst eine entsprechende Durchströmmöglichkeit aufweist, durch die das Schutzgas von der Gaszuführung kommend zum zu sinternden Werkstück gelangen kann. Dies ist eine sehr direkte Zuführung des Schutzgases zum zu sinternden Werkstück, was einerseits eine sehr einfache Konstruktion der Sintervorrichtung zulässt, andererseits aber auch dafür sorgt, dass das Schutzgas möglichst unmittelbar und vollständig zum Werkstück gelangt, womit dies besonders effektiv gegen unerwünschte Verfärbungen oder Oxidationen während des Sintervorgangs geschützt ist. Die Basisfläche ist die Fläche der Sintervorrichtung, die dazu vorgesehen ist, dass auf ihr das Werkstück während des Sintervorgangs direkt oder unter Zwischenlage eines Stützmaterials abgelegt ist. Die Basisfläche ist somit die Fläche der Sintervorrichtung, welche das zu sinternde Werkstück während des Sintervorgangs trägt.

Die Basisfläche begrenzt in einer bevorzugten Ausgestaltungsform in der Betriebsstellung während des Sintervorgangs den Sinterhohlraum nach unten hin, wobei die Gaszuführung unterhalb der Basisfläche angeordnet ist. Bevorzugte Varianten sehen in diesem Zusammenhang vor, dass die Gaszuführung, vorzugsweise unter Zwischenschaltung einer Gasverteilerkappe, in einen Gasverteilerhohlraum der Sintervorrichtung mündet, wobei der Gasverteilerhohlraum auf der dem Sinterhohlraum entgegen gesetzten Seite der Basisfläche angeordnet ist. Günstig ist es in diesem Zusammenhang, wenn der Gasverteilerhohlraum in der Betriebsstellung während des Sintervorgangs unterhalb der Basisfläche angeordnet ist.

Um den Durchströmbereich in der Basisfläche auszubilden, gibt es verschiedene Möglichkeiten. Der Durchströmbereich in der Basisfläche kann in Form zumindest einer Durchströmöffnung, vorzugsweise mehrerer Durchströmöffnungen, in der Basisfläche ausgebildet sein. Im Falle von mehreren Durchströmöffnungen kann sich hierdurch eine Art siebartige Konstruktion der Basisfläche ergeben. Es kann aber auch sein, dass der Durchströmbereich in der Basisfläche in Form zumindest eines offenporigen Bereichs in der Basisfläche ausgebildet ist. Die Durchströmöffnungen werden meist künstlich, z.B. mittels Bohren, Stanzen, Ätzen oder dergleichen geschaffen, während bei Basisflächen mit offenporigen Bereichen eine im Material an sich vorhandene, gut gasdurchlässige Porösität zum Hindurchführen des Schutzgases durch die Basisfläche genutzt wird. Natürlich können auch beide Varianten miteinander kombiniert werden, um den Durchströmbereich in der Basisfläche auszubilden.

Bei einer Basisfläche mit zumindest einem offenporigen Bereich kann es sich um hochtemperaturbeständige gasdurchlässige Formkörper metallischer oder keramischer Art handeln. Diese können inerte Eigenschaften aufweisen und/oder als scheibenförmige Trennschicht ausgebildet sein. Mögliche Materialien für solche Basisflächen sind ZrO2, Al2O3, SiC, SiN, HT-Legierungen, etc.

Besonders bevorzugte Ausgestaltungsformen der Erfindung sehen vor, dass die Basisfläche den Boden einer Sinterschale der Sintervorrichtung zur Aufnahme des zu sinternden Werkstücks während des Sintervorgangs bildet. Der Sinterhohlraum ist dann günstigerweise der Innenraum der Sinterschale.

Erfindungsgemäße Sintervorrichtungen werden in der Regel in Sinteröfen verwendet werden. Eine Vielzahl der beim Stand der Technik bekannten Sinteröfen weist zur Abführung der während des Sintervorgangs abgegebenen Gase eine Art Kamin auf, welcher einen gewissen Kamineffekt und damit eine Beunruhigung der Atmosphäre im Sinterofen bewirkt. Damit es durch diese Strömungen im Sinterofen nicht zu einer Beunruhigung oder Verwirbelung der sich um das Werkstück herum ausbildenden Schutzgasatmosphäre kommt, sehen bevorzugte Ausgestaltungsformen der erfindungsgemäßen Sintervorrichtung vor, dass der Sinterhohlraum in einer Betriebsstellung während des Sintervorgangs nach oben hin von einer Abdeckung abgeschlossen ist. Die Abdeckung kann gasdicht sein, aber auch zumindest eine Durchströmöffnung, vorzugsweise mehrere Durchströmöffnungen und/oder zumindest einen offenporigen Bereich aufweisen. Offenporige Bereiche der Abdeckung können wie die offenporigen Bereiche der Basisfläche ausgebildet sein.

Die Bestandteile der Sintervorrichtung können bevorzugt aus Metall, Metalllegierungen oder auch Keramik bestehen.

Neben der Sintervorrichtung betrifft die Erfindung, wie eingangs bereits erwähnt, auch eine Anordnung mit zumindest einem zu sinternden, insbesondere dentalen, Werkstück und einer Sintervorrichtung. Es handelt sich dabei um eine erfindungsgemäße Sintervorrichtung und das Werkstück ist günstigerweise, insbesondere während des Sintervorgangs, direkt oder unter Zwischenlage eines Stützmaterials auf der Basisfläche abgelegt.

Besonders bevorzugte Varianten einer solchen Anordnung sehen dabei vor, dass das Schutzgas von der Gaszuführung kommend ausschließlich durch das Stützmaterial hindurch dem Werkstück zuführbar ist. Hierdurch wird der dem Werkstück zugeführte Gasstrom im Stützmaterial noch einmal in unmittelbarer Umgebung des zu sinternden Werkstücks einer Reinigung unterzogen, wodurch den Sintervorgang störende Fremdgase aus dem, dem Werkstück zugeführten Gasstrom herausgefiltert werden und somit in unmittelbarer Umgebung des Werkstücks während des Sintervorgangs eine sehr reine Schutzgasatmosphäre erreicht wird. Im Ergebnis dessen können unerwünschte Verfärbungen und sonstige Beeinträchtigungen des Werkstücks während des Sintervorgangs besonders gut vermieden werden. Insbesondere bei diesen Varianten wird sichergestellt, dass der dem Werkstück zugeführte Gasstrom mittels des Stützmaterials unmittelbar vor dem Erreichen des Bereichs um das Werkstück gereinigt wird. Hierdurch kann bei einem relativ geringen Schutzgasverbrauch eine hohe Qualität der herzustellenden Werkstücke auch bei sehr hohen Sintertemperaturen von über 1200° C sichergestellt werden.

Besonders bevorzugte Varianten sehen vor, dass das Stützmaterial den Durchströmbereich vollständig abdeckt oder im Durchströmbereich vollflächig angeordnet ist oder den Durchströmbereich vollflächig ausbildet.

Als Schutzgas können die beim Stand der Technik bereits als solche verwendeten, insbesondere innerten, Gase zur Anwendung kommen. Das Schutzgas dient der Verdrängung der Luft und sonstigen Gase aus der Umgebung des Werkstücks und der Bereitstellung einer das Sintergut während des Sintervorgangs umgebenden und nicht mit dem Sintergut reagierenden Gashülle. Als Schutzgas können z.B. Argon und/oder Stickstoff verwendet werden.

Günstig ist es, wenn das Stützmaterial auf der Basisfläche aufliegt. Alternativ kann das Stützmaterial aber auch in die Basisfläche integriert sein. Da meistens die Verfärbungen und sonstigen Beeinträchtigungen des Werkstücks während des Sintervorgangs auf eine Oxidation zurückzuführen sind, sehen besonders bevorzugte Ausgestaltungsformen der Erfindung vor, dass das Stützmaterial ein Sauerstoff an sich bindendes Material ist. Unter den Begriff eines Materials fällt in diesem Zusammenhang auch eine Mischung verschiedener Materialien. In anderen Worten weist das Stützmaterial somit zumindest eine gewisse, vorzugsweise eine gute, Sauerstoffaffinität auf. Besonders bevorzugt ist vorgesehen, dass das Stützmaterial eine höhere Sauerstoffaffinität aufweist als das Werkstück. Unter Sauerstoffaffinität wird dabei das Bestreben eines Stoffes bzw. eines Materials verstanden, Sauerstoff, insbesondere durch chemische Reaktion, an sich zu binden. Je höher die Sauerstoffaffinität eines Stoffes bzw. Materials ist, desto eher und desto mehr Sauerstoff wird an diesen Stoff bzw. dieses Material gebunden. Mit Sauerstoff bzw. Restsauerstoff ist dabei der freie noch ungebundene Sauerstoff gemeint, durch welchen es zu einer ungewollten Oxidation des Werkstücks kommen kann. Dieser liegt, abgesehen von eventuell vorhandenen Sauerstoffradikalen, in der Luft in der Regel als Molekül mit zwei Sauerstoffatomen vor.

Besonders bevorzugte Ausgestaltungsformen der Erfindung sehen vor, dass das Stützmaterial körniges Schüttgut und/oder zumindest einen gasdurchlässigen Festkörper aufweist oder daraus besteht. Im Falle eines körnigen Schüttguts kann das Stützmaterial aus keramischen Stützkörnern, wie z.B. an sich bekannten keramischen Sinterperlen, z.B. aus mit Yttrium teilstabilisiertem Zinkoniumdioxid bestehen bzw. diese aufweisen. Die keramischen Stützkörner weisen in bevorzugten Ausgestaltungsformen einen Durchmesser zwischen 0,4mm und 2mm auf. Es hat sich gezeigt, dass bei erfindungsgemäßen Anordnungen beim Hindurchleiten des Schutzgases durch das Stützmaterial schon unter Verwendung eines solch gewöhnlichen Stützmaterials ein erheblicher Reinigungseffekt erzielt wird. Zusätzlich zu den keramischen Stützkörnern können aber auch noch Zusatzmaterialien z.B. zur Reduktion des Sauerstoffgehalts dem Stützmaterial beigemengt sein. Diese Materialien bzw. Materialmischungen können als Stützmaterial aber auch als ein gasdurchlässiger, vorzugsweise offenporiger, Festkörper ausgebildet sein. Auch Mischformen bei dem das Stützmaterial aus Schüttgut bzw. Schüttgutmischungen und aus zumindest einem solchen gasdurchlässigen Festkörper besteht, sind möglich.

Der Begriff eines dentalen Werkstücks umfasst all diejenigen künstlich angefertigten Komponenten, welche im Gebiss als Ersatz für natürliche Zähne oder Zahnbestandteile eingesetzt werden können, sowie Hilfskörper zum Befestigen oder zur Herstellung solcher Zahnersatzteile. Bei den zu sinternden Werkstücken handelt es sich besonders bevorzugt um solche aus Metall oder Metalllegierungen. Die Werkstücke können im Grünlings- oder Weißlingszustand gesintert werden. Die Werkstücke liegen in erfindungsgemäßen Anordnungen und damit auch während des Sintervorgangs auf dem Stützmaterial, bevorzugt direkt, auf. Sie stehen also zumindest teilweise, vorzugsweise größtenteils, über das Stützmaterial über, womit Probleme mit der während des Sintervorgangs auftretenden Schrumpfung vermieden sind.

Wie eingangs erwähnt, betrifft die Erfindung neben einer erfindungsgemäßen Anordnung auch ein erfindungsgemäßes Verfahren zum Sintern eines insbesondere dentalen Werkstücks mit einer erfindungsgemäßen Sintervorrichtung. Soweit anwendbar, sind die obigen Ausführungen zur erfindungsgemäßen Ausgestaltungsform einer Sintervorrichtung und/oder der Anordnung auch für das nachfolgend geschilderte erfindungsgemäße Verfahren gültig. Beim erfindungsgemäßen Verfahren ist jedenfalls vorgesehen, dass das zu sinternde Werkstück während des Sintervorgangs direkt oder unter Zwischenlage eines Stützmaterials auf der Basisfläche abgelegt ist und das Schutzgas von der Gaszuführung kommend, vorzugsweise ausschließlich, durch den Durchströmbereich der Basisfläche hindurch dem Werkstück zugeleitet und/oder in den Sinterhohlraum eingeleitet wird.

In den nachfolgend beschriebenen Figuren sind verschiedene erfindungsgemäße Sintervorrichtungen und Anordnungen, mit denen auch erfindungsgemäße Verfahren durchgeführt werden können, dargestellt. Es zeigen:
Fig. 1 bis 6 verschiedene Ausgestaltungsformen erfindungsgemäßer Sintervorrichtungen;
Fig. 7 eine Darstellung zur Gasverteilerkappe gemäß der Fig. 1 bis 3 und 5 sowie 6 und
Fig. 8 und 9 verschiedene Varianten des Stützmaterials.

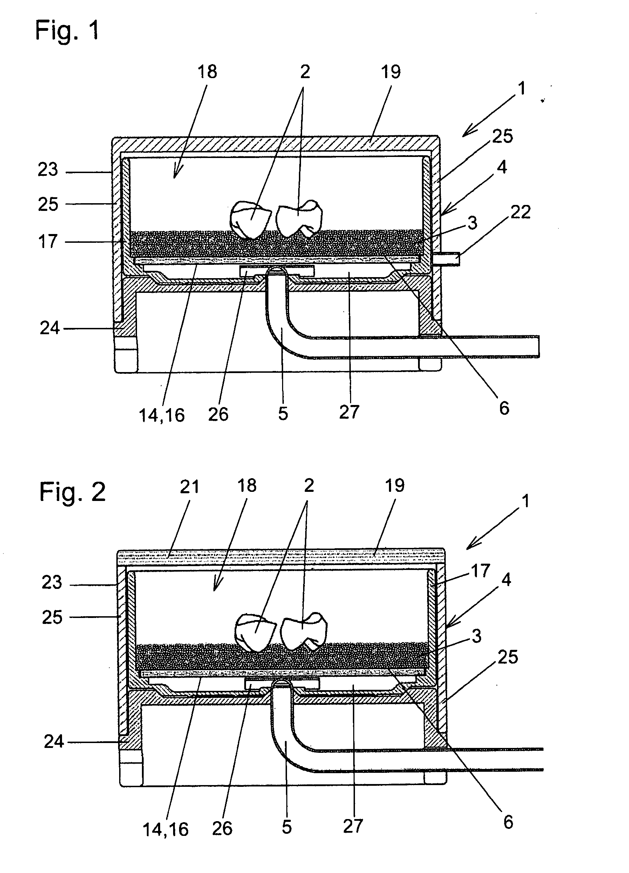

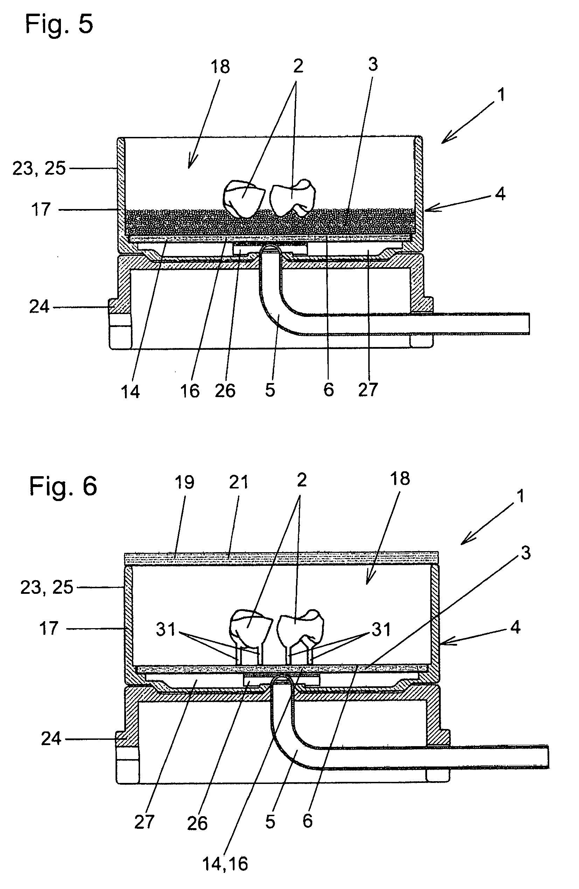

In den Fig. 1 bis 6 sind jeweils Anordnungen 1 mit zumindest einem zu sinternden dentalen Werkstück 2 und mit zumindest einem Stützmaterial 3 und mit einer Sintervorrichtung 4 zum Sintern des Werkstücks 2 gezeigt. Die Sintervorrichtungen 4 weisen jeweils zumindest eine Gaszuführung 5 für Schutzgas und zumindest eine Basisfläche 6 auf. Die Gaszuführung 5 ist günstigerweise, wie hier auch realisiert, als Gaszuführungsrohr ausgebildet. Man könnte in bevorzugten Varianten auch von einer Gaszuführleitung 5 sprechen. Die Basisfläche 6 ist diejenige Fläche, auf der das Werkstück während des Sintervorgangs ablegbar ist. Man könnte bei der Basisfläche 6 insofern auch von einer Bodenfläche sprechen. In allen genannten Figuren ist die Anordnung 1 während des Sintervorgangs gezeigt. In der jeweils dargestellten Betriebsstellung liegen die zu sinternden Werkstücke 2 auf dem Stützmaterial 3 auf und stehen günstigerweise über das Stützmaterial 3 zumindest teilweise, vorzugsweise größtenteils, über. In den Ausgestaltungsformen der Fig. 1 bis 5 wird das Schutzgas von der Gaszuführung 5 kommend, ausschließlich durch das Stützmaterial 3 hindurch, dem Werkstück 2 zugeführt. Das Stützmaterial 3 liegt in diesen Varianten auf der Basisfläche 6 auf. In der Variante gemäß Fig. 6 ist das Stützmaterial 3 wie weiter unten noch im Detail erläutert, entweder weggelassen oder in die Basisfläche 6 integriert. Bei dem Stützmaterial 3 handelt es sich günstigerweise um ein Sauerstoff an sich bindendes Material. Das Stützmaterial 3 kann als körniges Schüttgut und/oder als zumindest ein gasdurchlässiger Festkörper ausgebildet sein oder solche Ausgestaltungsformen aufweisen.

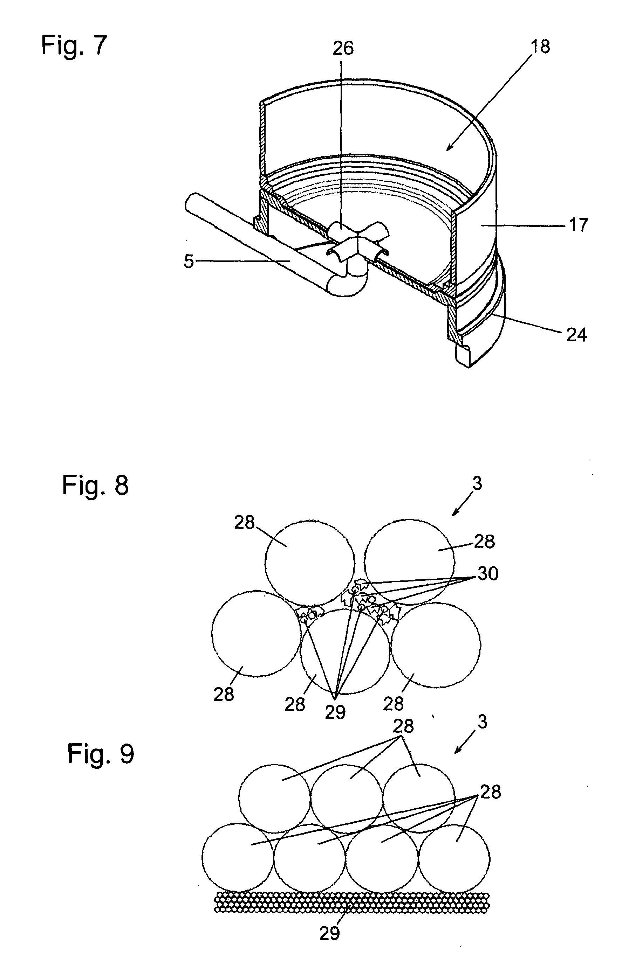

In den gezeigten Varianten gemäß der Fig. 1 bis 6 ist vorgesehen, dass die Gaszuführung 5 auf der dem Sinterhohlraum 18 entgegengesetzten Seite der Basisfläche 6 angeordnet ist und die Basisfläche 6 zur Einleitung des von der Gaszuführung 5 kommenden Schutzgases in den Sinterhohlraum 18 zumindest einen für das Schutzgas durchlässigen Durchströmbereich 14 aufweist. In der dargestellten Betriebsstellung während des Sintervorgangs ist der Sinterhohlraum 18 nach unten hin von der Basisfläche 6 begrenzt und die Gaszuführung 5 ist unterhalb der Basisfläche 6 angeordnet. Die Gaszuführung 5 mündet in einen Gasverteilerhohlraum 27 der Sintervorrichtung 4, wobei der Gasverteilerhohlraum 27 auf der dem Sinterhohlraum 18 entgegengesetzten Seite der Basisfläche 5 angeordnet ist. In der dargestellten Betriebsstellung ist der Gasverteilerhohlraum 27 dieser Ausführungsbeispiele während des Sintervorgangs somit unterhalb der Basisfläche 6 angeordnet. Zur möglichst gleichmäßigen Verteilung des aus der Gaszuführung 5 ausströmenden Schutzgases im Gasverteilerhohlraum 27 kann eine Gasverteilerkappe 26 vorgesehen sein, wie sie in den Fig. 1 bis 3 sowie 5 und 6 gezeigt und in Fig. 7 besonders gut sichtbar dargestellt ist.

Durch diese Konstruktion wird auch erreicht, dass das Schutzgas ausschließlich durch das Stützmaterial 3 hindurch dem Werkstück 2 zuführbar ist, indem das Schutzgas von der Gaszuführung 5 kommend, ausschließlich durch den Durchströmbereich 14 in der Basisfläche 6 hindurch, dem Werkstück 2 zuführbar ist, wobei das Stützmaterial 3 vollständig abdeckt, wie dies in den Ausführungsvarianten gemäß der Fig. 1 bis 5 realisiert ist, oder den Durchströmbereich 14 vollflächig ausbildet, wie dies in Fig. 6 der Fall ist.

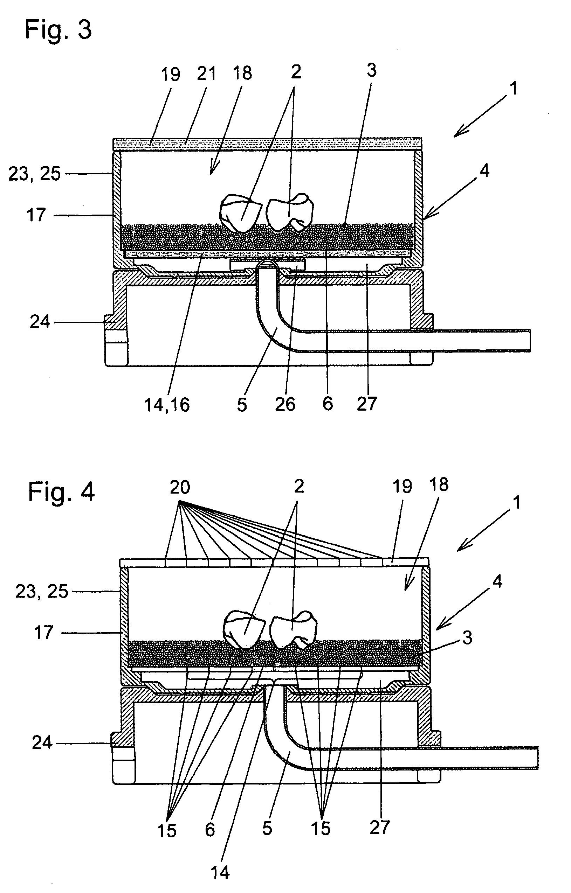

Der Durchströmbereich 14 in der Basisfläche 6, durch den das Schutzgas hindurch in den Sinterhohlraum 18 eintreten kann, kann in Form zumindest einer Durchströmöffnung 15, vorzugsweise mehrerer Durchströmöffnungen 15, in der Basisfläche 6 ausgebildet sein. Dies ist im Ausführungsbeispiel gemäß Fig. 4 so ausgeführt. Alternativ kann die Basisfläche 6 auch zumindest einen offenporigen Bereich 16 aufweisen oder insgesamt als ein solcher offenporiger Bereich 16 ausgebildet sein, wie dies in den Ausführungsvarianten gemäß der Fig. 1 bis 3 sowie 5 und 6 der Fall ist. In den Ausgestaltungsformen gemäß der Fig. 1 bis 6, bildet die Basisfläche 6 den Boden einer Sinterschale 17 der Sintervorrichtung 4 zur Aufnahme des zu sinternden Werkstücks 2 während des Sintervorgangs. Der Sinterhohlraum 18 liegt im Innenraum der Sinterschale 17. In den Varianten gemäß der Fig. 1 bis 5 deckt das Stützmaterial 3 den Durchströmbereich 14 in der Basisfläche 6 jeweils vollständig ab. In der Variante gemäß Fig. 6 ist das Stützmaterial 3 entweder ganz weggelassen oder in die Basisfläche 6 integriert. Bei der zuletzt genannten Variante kann der Durchströmbereich 14 vollständig vom Stützmaterial 3 ausgebildet sein. Die Sinterschalen 17 der Ausführungsvarianten gemäß der Fig. 1 bis 6 sind jeweils auf einem Basisträger 24 der Sintervorrichtung 4 abgestützt.

In der Ausführungsvariante gemäß der Fig. 1 ist die Sinterschale 17 von einer haubenartigen Außenwand 23 umgeben, welche sich auf dem Basisträger 24 abstützt. Diese Außenwand 23 der Sintervorrichtung 4 weist sowohl die Seitenwand 25 als auch die Abdeckung 19 auf. Im Ausführungsbeispiel gemäß Fig. 1 ist die Abdeckung 19 gasdicht ausgebildet. Um Gas aus dem Sinterhohlraum 18 ablassen zu können, ist in diesem Ausführungsbeispiel gemäß Fig. 1 ein Gasablass 22 in der Außenwand 23 bzw. deren Seitenwand 25 vorgesehen. Durch diesen Gasablass 22 können sowohl die mittels Schutzgas aus dem Sinterhohlraum 18 verdrängte Luft als auch gegebenenfalls am Anfang des Sintervorgangs entstehende Abgase sowie auch überschüssiges Schutzgas ausströmen. Die Abdeckung 19 verhindert, dass außerhalb der Sintervorrichtung 4 im hier nicht dargestellten Sinterofen entstehende Strömungen die Schutzgasatmosphäre im Sinterhohlraum 18 stören können.

Beim Betrieb der erfindungsgemäßen Sintervorrichtung 4 bzw. Anordnung 1 gemäß Fig. 1 ist sichergestellt, dass das Schutzgas ausschließlich durch das Stützmaterial 3 hindurch dem Werkstück 2 zugeführt wird. Das Schutzgas tritt hierzu aus der Gaszuführung 5 aus und wird von der Gasverteilerkappe 26 im Gasverteilerhohlraum 27 verteilt. Es tritt dann durch den Durchströmbereich 14 der Basisfläche 6 hindurch und wird so dem Werkstück 2 zugeleitet bzw. in den Sinterhohlraum 18 eingeleitet, wobei es vollständig durch das Stützmaterial 3 hindurch geführt wird, was den eingangs erwähnten Reinigungsprozess des Schutzgases und insbesondere die Beseitigung bzw. zumindest weitere Reduzierung des Restsauerstoffgehalts bewirkt. Bevor der eigentliche Sinterprozess beginnt, wird der Sinterhohlraum 18 mit Schutzgas geflutet, so dass der vorher vorhandene Anteil an Luft, vorzugsweise vollständig, aus dem Sinterhohlraum 18 verdrängt ist. Der Sintervorgang beginnt günstigerweise erst nach Abschluss dieser Flutung des Sinterhohlraums 18 mit Schutzgas. Das Schutzgas weist, wie eingangs darauf hingewiesen, günstigerweise eine größere Dichte als die Luft auf.

Die Sintervorrichtung 4 bzw. Anordnung 1 des Ausführungsbeispiels gemäß Fig. 2 unterscheidet sich von der des Ausführungsbeispiels gemäß Fig. 1 nur durch den Aufbau der Außenwand 23. In der Variante gemäß Fig. 2 ist die Außenwand 23 zweiteilig aufgebaut. Sie weist eine zylindermantelförmige Seitenwand 25 auf, auf der eine separat ausgebildete Abdeckung 19 aufliegt. Die Abdeckung 19 ist in dieser Ausführungsvariante gemäß Fig. 2 als ein offenporiger Bereich 21 ausgebildet, sodass die aus dem Sinterhohlraum 18 austretenden Gase durch sie hindurchtreten können. Hierdurch kann der Gasablass 22 in der Seitenwand 25 entfallen. Trotz ihrer offenporigen Ausgestaltung sorgt die Abdeckung 19 in diesem Ausführungsbeispiel immer noch dafür, dass keine außerhalb der Sintervorrichtung 4 im Sinterofen entstehenden Verwirbelungen Einfluss auf die Schutzgasatmosphäre im Sinterhohlraum 18 nehmen können.

Der Vollständigkeit halber wird darauf hingewiesen, dass die offenporigen Bereiche 21 in der Abdeckung 19 wie auch die offenporigen Bereiche 16 in der Basisfläche 6 über die gesamte Abdeckung 19 bzw. Basisfläche 6 aber auch nur über Teilbereiche der jeweiligen Abdeckung 19 bzw. Basisfläche 6 ausgebildet sein können.

In Fig. 3 ist eine weiter abgewandelte Variante einer Sintervorrichtung 4 dargestellt, bei der auf eine separate Seitenwand 25 verzichtet wird. In dieser Variante bildet die Außenwand der Sinterschale 17 gleichzeitig die Außenwand 23 der Sintervorrichtung 4. Die hier ebenfalls offenporig ausgebildete Abdeckung 19 liegt direkt auf dem oberen Rand der Sinterschale 17 auf. Fig. 4 zeigt eine Abwandlungsform der Variante gemäß Fig. 3, bei der der Durchströmbereich 14 in der Basisfläche 6 nicht als offenporiger Bereich sondern als eine Anordnung mehrerer flächig verteilter Durchströmöffnungen 15 ausgebildet ist. In dieser Variante weist die Abdeckung 19 ebenfalls flächig verteilte Durchströmöffnungen 20 auf. Darüber hinaus wurde in dieser Variante auf die optionale Gasverteilerkappe 26 verzichtet. Der Vollständigkeit halber wird darauf hingewiesen, dass bei allen hier gezeigten Ausführungsvarianten, soweit anwendbar, die offenporigen Bereiche 16 durch die Durchströmöffnungen 15 in der jeweiligen Basisfläche 6 und die offenporigen Bereiche 21 durch die jeweiligen Durchströmöffnungen 20 in der Abdeckung 19 ersetzt werden können und umgekehrt. Es kann sich auch nur um eine einzige Durchströmöffnung 15 bzw. 20 handeln. Es kann auch in allen Ausgestaltungsformen die Gasverteilerkappe 26 vorhanden sein oder weggelassen werden.

Fig. 5 entspricht im Wesentlichen der Variante gemäß Fig. 3, wobei in Fig. 5 allerdings die Abdeckung 19 vollständig weggelassen wurde. Diese Variante bietet sich vor allem dann an, wenn keine außerhalb der Sintervorrichtung 1 auftretenden Verwirbelungen oder Strömungen die Schutzgasatmosphäre in dem Sinterhohlraum 18 stören können und das Schutzgas eine höhere Dichte als die zu verdrängende Luft aufweist.

Fig. 6 zeigt weitere Abwandlungsformen der Variante gemäß Fig. 5. In einer ersten Variante ist bei der Ausgestaltungsform gemäß Fig. 6 beispielhaft gezeigt, dass auch gar kein Stützmaterial 3 vorhanden sein muss. Die zu sinternden Werkstücke stehen bei dieser Variante mit ihren Stützfüßen 31 direkt auf der Basisfläche 6. Solche Anordnungen 1 bieten sich vor allem dann an, wenn Werkstücke 2 aus keramischem Material gesintert werden sollen. In einer anderen, ebenfalls mit Fig. 6 veranschaulichten Variante ist hingegen vorgesehen, dass das Stützmaterial 3 als gasdurchlässiger Festkörper ausgebildet und in die Basisfläche 6 integriert ist. Dies ist durch das Hinzufügen des Bezugszeichens 3 in Fig. 6 auch dargestellt. Bei der zuerst diskutierten Variante ganz ohne Stützmaterial 3 kann natürlich auch das Bezugszeichen 3 in Fig. 6 entfallen. Bei der Variante mit Stützmaterial 3 wird das Schutzgas ausschließlich durch das Stützmaterial 3 hindurch dem Werkstück 2 zugeführt. Die Werkstücke 2 stehen mit ihren Stützfüßen 31 bei dieser Ausgestaltungsform direkt auf der Basisfläche 6 auf. In dieser Variante bildet das Stützmaterial 3 vollflächig den Durchströmbereich 14 aus. Alternativ zum gasdurchlässigen Festkörper könnte das Stützmaterial 3 in dieser Variante auch in einem gitterkäfigartigen Körper angeordnet sein, dessen obere Gitterfläche dann die Basisfläche 6 bildet. In dieser Variante wäre das Stützmaterial 3 dann vollflächig im Durchströmbereich 14 angeordnet.

Fig. 7 ist eine teilweise geschnittene Darstellung, welche lediglich zur Veranschaulichung einer möglichen Ausgestaltungsform der Gasverteilerkappe 26 dient.

Auch wenn die Ausführungsbeispiele gemäß Fig. 1 bis 6 alle zeigen, dass die Basisfläche 6 der Boden einer Sinterschale ist, so sei der Vollständigkeit halber darauf hingewiesen, dass nicht unbedingt eine Sinterschale 17 vorhanden sein muss. Die Basisfläche 6 kann auch direkt vom Basisträger 24 oder in anderer Art und Weise ausgebildet sein.

Wie eingangs bereits erläutert, kann es sich beim Stützmaterial 3 z.B. um ein Granulat, ein Pulver oder eine Granulat-Pulver-Mischung handeln. Das Stützmaterial 3 kann aber auch in Form eines gasdurchlässigen Festkörpers ausgebildet sein oder einen solchen aufweisen. Auch Mischformen davon sind möglich. Es kann sich beim Stützmaterial 3 z.B. um übliche, im Handel erhältliche sogenannte Sinterperlen z.B. aus mit Yttrium teilstabilisiertem Zirkoniumdioxid handeln. Es hat sich gezeigt, dass auch ein solches Stützmaterial 3 bereits eine gewisse Reinigungsfunktion und vor allem eine sauerstoffbindende Funktion aufweist. Auch andere keramische Stützkörner oder Mischungen daraus können als Stützmaterial 3 zum Einsatz kommen. Um die Reinigungsfunktion und insbesondere die Bindung von Restsauerstoff zu verbessern, kann diesen keramischen Stützkörnern 28 aber auch ein Zusatzmaterial 29 beigemengt sein, welches insbesondere eine höhere Sauerstoffaffinität als die keramischen Stützkörper 28 selbst aufweisen kann. Die höhere Sauerstoffaffinität des Zusatzmaterials 29 kann z.B. erreicht werden, indem als Zusatzmaterial ein Material oder eine Materialmischung verwendet wird, welche zumindest ein chemisches Element oder zumindest eine chemische Verbindung aufweist, welche eine höhere Sauerstoffaffinität als das Material des Werkstücks 2 bzw. als das Material der keramischen Stützkörner 28 aufweist. Insbesondere kann das Zusatzmaterial 29 dazu dienen, den Restsauerstoff chemisch an sich zu binden. Handelt es sich bei dem Zusatzmaterial 29 um Komponenten, die beim Sintervorgang am Werkstück 2 anhaften könnten, so ist es günstig, wenn zwischen dem Zusatzmaterial 29 und dem Werkstück 2 eine Zwischenschicht aus keramischen Stützkörnern 28 vorliegt. Die verschiedenen Komponenten des Stützmaterials 3 können somit als eine homogene aber auch als eine homogene Mischung vorliegen. Zusatzmaterialien 29 mit hoher Sauerstoffaffinität können z.B. Metalle oder Metalllegierungen sein. Es kommen aber auch keramische Zusatzmaterialien in Frage. Das Zusatzmaterial 29 kann ebenfalls in Pellets- oder Pulverform vorliegen. Beim Zusatzmaterial kann es sich z.B. um Kobald, Chrom, Molybdän, Titan oder Titanlegierungen handeln. Das Stützmaterial 3 kann somit z.B. ein Schüttgut bestehend aus zwei Komponenten wie z.B. dem keramischen Stützkorn 28 und dem Zusatzmaterial 29 sein. Es sind aber auch Mehrkomponentenmischungen denkbar. Z.B. kann in Form einer Trägersubstanz 30 eine dritte Komponente im Stützmaterial 3 vorhanden sein. Diese Trägersubstanz 30 kann dazu dienen, dass sich das Zusatzmaterial 29 an ihr anlagert. Es kann sich z.B. um keramische Materialien wie Aluminiumkorund handeln. Die Trägersubstanz 30 weist günstigerweise eine raue und/oder abrasive Oberfläche auf. Günstigerweise ist der Korndurchmesser der keramischen Stützkörner 28 größer als der Korndurchmesser der Trägersubstanz 30. Der Korndurchmesser der Zusatzmaterialien 29 ist dann günstigerweise wiederum kleiner als der der Trägersubstanz 30. Auch beim Fehlen der Trägersubstanz ist der Korndurchmesser der Stützkörner günstigerweise größer als der des Zusatzmaterials. Fig. 10 zeigt ein Stützmaterial 3 in Form einer solchen Dreikomponentenmischung. Durch die geringeren Korndurchmesser kann die Trägersubstanz 30 samt des daran angelagerten Zusatzmaterials 29 zwischen den keramischen Stützkörpern 28 hindurch gleiten und sich zumindest im Wesentlichen im unteren Bereich des Stützmaterials 30 ablagern. Hierdurch wird, wie oben bereits erwähnt, eine Ausgestaltungsform erreicht, bei der zumindest ein Teil der keramischen Stützkörper 28 zwischen dem Werkstück 2 und den restlichen Bestandteilen des Stützmaterials 3 angeordnet ist. Fig. 11 zeigt eine weitere Variante des Stützmaterials 3. Hier handelt es sich um eine Mischung aus körnigem Schüttgut in Form der keramischen Stützkörner 28 und einem darunter angeordneten gasdurchlässigen Festkörper bestehend aus dem Zusatzmaterial 29, welches in diesem Ausführungsbeispiel wiederum durch die oben genannten Maßnahmen eine höheren Sauerstoffaffinität als die keramischen Stützkörner 28 aufweisen kann. Der Vollständigkeit halber sei darauf hingewiesen, dass auch ausschließlich gasdurchlässige Festkörper als Stützmaterial 3 verwendet werden können.

### Legende zu den Hinweisziffern:

- 1: Anordnung
- 2: Werkstück
- 3: Stützmaterial
- 4: Sintervorrichtung
- 5: Gaszuführung
- 6: Basisfläche
- 14: Durchströmbereich
- 15: Durchströmöffnung
- 16: offenporiger Bereich
- 17: Sinterschale
- 18: Sinterhohlraum
- 19: Abdeckung
- 20: Durchströmöffnung
- 21: offenporiger Bereich
- 22: Gasablass
- 23: Außenwand
- 24: Basisträger
- 25: Seitenwand
- 26: Gasverteilerkappe
- 27: Gasverteilerhohlraum
- 28: keramisches Stützkorn
- 29: Zusatzmaterial
- 30: Trägersubstanz
- 31: Stützfuß

## Patentansprüche

1. Sintervorrichtung (4) zum Sintern zumindest eines, insbesondere dentalen, Werkstücks (2) mit einem Sinterhohlraum (18) zur Aufnahme des zu sinternden Werkstücks (2) während des Sintervorgangs, wobei der Sinterhohlraum (18) von einer Basisfläche (6) der Sintervorrichtung (4) begrenzt ist, wobei die Sintervorrichtung (4) zumindest eine Gaszuführung (5) zur Einleitung von Schutzgas in den Sinterhohlraum (18) aufweist, **dadurch gekennzeichnet, dass** die Gaszuführung (5) auf der dem Sinterhohlraum (18) entgegen gesetzten Seite der Basisfläche (6), auf der das Werkstück während des Sintervorgangs ablegbar ist, angeordnet ist und die Basisfläche (6) zur Einleitung des von der Gaszuführung (5) kommenden Schutzgases in den Sinterhohlraum (18) zumindest einen für das Schutzgas durchlässigen Durchströmbereich (14) aufweist.

2. Sintervorrichtung (4) nach Anspruch 1, **dadurch gekennzeichnet, dass** die Basisfläche (6) in einer Betriebsstellung während des Sintervorgangs den Sinterhohlraum (18) nach unten hin begrenzt und die Gaszuführung (5) unterhalb der Basisfläche (6) angeordnet ist.

3. Sintervorrichtung (4) nach Anspruch 1 oder 2, **dadurch gekennzeichnet, dass** die Gaszuführung (5), vorzugsweise unter Zwischenschaltung einer Gasverteilerkappe (26) in einen Gasverteilerhohlraum (27) der Sintervorrichtung (4) mündet, wobei der Gasverteilerhohlraum (27) auf der dem Sinterhohlraum (18) entgegen gesetzten Seite der Basisfläche (5) angeordnet ist.

4. Sintervorrichtung (4) nach Anspruch 2 und 3, **dadurch gekennzeichnet, dass** der Gasverteilerhohlraum (27) in der Betriebsstellung während des Sintervorgangs unterhalb der Basisfläche (6) angeordnet ist.

5. Sintervorrichtung (4) nach einem der Ansprüche 1 bis 4, **dadurch gekennzeichnet, dass** der Durchströmbereich (14) in der Basisfläche (6) in Form zumindest einer Durchströmöffnung (15), vorzugsweise mehrerer Durchströmöffnungen (15), in der Basisfläche (6) und/oder zumindest eines porösen Bereichs (18) in der Basisfläche (6) ausgebildet ist.

6. Sintervorrichtung (4) nach einem der Ansprüche 1 bis 5, **dadurch gekennzeichnet, dass** die Basisfläche (6) den Boden einer Sinterschale (17) der Sintervorrichtung (4) zur Aufnahme des zu sinternden Werkstücks (2) während des Sintervorgangs bildet.

7. Sintervorrichtung (4) nach Anspruch 6, **dadurch gekennzeichnet, dass** der Sinterhohlraum (18) der Innenraum der Sinterschale (17) ist.

8. Sintervorrichtung (4) nach einem der Ansprüche 1 bis 7, **dadurch gekennzeichnet, dass** der Sinterhohlraum (18) in einer Betriebsstellung während des Sintervorgangs nach oben hin von einer Abdeckung (19) abgeschlossen ist.

9. Sintervorrichtung (4) nach Anspruch 8, **dadurch gekennzeichnet, dass** die Abdeckung (19) gasdicht ist oder zumindest eine Durchströmöffnung (20), vorzugsweise mehrere Durchströmöffnungen (20), und/oder zumindest einen porösen Bereich (21) aufweist.

10. Anordnung (1) mit zumindest einem zu sinternden, insbesondere dentalen, Werkstück (2) und einer Sintervorrichtung, **dadurch gekennzeichnet, dass** die Sintervorrichtung eine Sintervorrichtung (4) nach einem der Ansprüche 1 bis 9 ist und das Werkstück, insbesondere während des Sintervorgangs, direkt oder unter Zwischenlage eines Stützmaterials (3) auf der Basisfläche (6) abgelegt ist.

11. Anordnung (1) nach Anspruch 10, **dadurch gekennzeichnet, dass** das Stützmaterial (3) auf der Basisfläche (6) aufliegt oder in diese integriert ist.

12. Anordnung (1) nach Anspruch 10 oder 11, **dadurch gekennzeichnet, dass** das Schutzgas von der Gaszuführung (5) kommend ausschließlich durch das Stützmaterial (3) hindurch dem Werkstück (2) zuführbar ist.

13. Anordnung (1) nach einem der Ansprüche 10 bis 12, **dadurch gekennzeichnet, dass** das Stützmaterial (3) den Durchströmbereich (14) vollständig abdeckt oder im Durchströmbereich (14) vollflächig angeordnet ist oder den Durchströmbereich (14) vollflächig ausbildet.

14. Anordnung (1) nach einem der Ansprüche 10 bis 13, **dadurch gekennzeichnet, dass** das Stützmaterial (3) ein Sauerstoff an sich bindendes Material ist, wobei vorzugsweise vorgesehen ist, dass das Stützmaterial (3) eine höhere Sauerstoffaffinität aufweist als das Werkstück.

15. Verfahren zum Sintern zumindest eines, insbesondere dentalen, Werkstücks (2) mit einer Sintervorrichtung (4) nach einem der Ansprüche 1 bis 9, **dadurch gekennzeichnet, dass** das zu sinternde Werkstück während des Sintervorgangs direkt oder unter Zwischenlage eines Stützmaterials (3) auf der Basisfläche (6) abgelegt ist und das Schutzgas von der Gaszuführung (5) kommend, vorzugsweise ausschließlich, durch den Durchströmbereich (14) der Basisfläche (6) hindurch dem Werkstück zugeleitet und/oder in den Sinterhohlraum (18) eingeleitet wird.

## Claims

1. A sintering device (4) for sintering at least one, in particular dental, workpiece (2), having a sintering cavity (18) for the receiving during the sintering procedure of the workpiece (2) to be sintered, wherein the sintering cavity (18) is bounded by a base surface (6) of the sintering device (4), wherein the sintering device (4) has at least one gas feed (5) for the introduction of protective gas into the sintering cavity (18), **characterised in that** the gas feed (5) is arranged on the side, of the base surface (6) on which the workpiece can be placed during the sintering procedure, opposite the sintering cavity (18) and, for introduction into the sintering cavity (18) of the protective gas coming from the gas feed (5), the base surface (6) has at least one through-flow region (14) permeable to the protective gas.

2. A sintering device (4) according to claim 1, **characterised in that** the base surface (6) bounds the sintering cavity (18) downwards in an operating position during the sintering procedure and the gas feed (5) is arranged below the base surface (6).

3. A sintering device (4) according to claim 1 or 2, **characterised in that** the gas feed (5) opens into a gas distribution cavity (27) of the sintering device (4), preferably with the interpositioning of a gas distribution cap (26), wherein the gas distribution cavity (27) is arranged on the side, of the base surface (5), opposite the sintering cavity (18).

4. A sintering device (4) according to claim 2 and 3, **characterised in that** the gas distribution cavity (27) is arranged below the base surface (6) in the operating position during the sintering procedure.

5. A sintering device (4) according to any one of claims 1 to 4, **characterised in that** the through-flow region (14) in the base surface (6) is in the form of at least one through-flow opening (15), preferably a plurality of through-flow openings (15), in the base surface (6) and/or at least one porous region (18) in the base surface (6).

6. A sintering device (4) according to any one of claims 1 to 5, **characterised in that** the base surface (6) forms the bottom of a sintering bowl (17) of the sintering device (4) for the receiving during the sintering procedure of the workpiece (2) to be sintered.

7. A sintering device (4) according to claim 6, **characterised in that** the sintering cavity (18) is the interior of the sintering bowl (17).

8. A sintering device (4) according to any one of claims 1 to 7, **characterised in that** the sintering cavity (18) is closed upwards by a covering (19) in an operating position during the sintering procedure.

9. A sintering device (4) according to claim 8, **characterised in that** the covering (19) is gas-tight or has at least one through-flow opening (20), preferably a plurality of through-flow openings (20), and/or at least one porous region (21).

10. An arrangement (1) having at least one, in particular dental, workpiece (2) to be sintered and a sintering device, **characterised in that** the sintering device is a sintering device (4) according to any one of claims 1 to 9 and the workpiece is, in particular during the sintering procedure, placed on the base surface (6) directly or with the interposition of a supporting material (3).

11. An arrangement (1) according to claim 10, **characterised in that** the supporting material (3) rests on the base surface (6) or is integrated therein.

12. An arrangement (1) according to claim 10 or 11, **characterised in that** the protective gas coming from the gas feed (5) is able to be fed to the workpiece (2) solely through the supporting material (3).

13. An arrangement (1) according to any one of claims 10 to 12, **characterised in that** the supporting material (3) completely covers the through-flow region (14) or is arranged over the entire surface of the through-flow region (14) or forms the entire surface of the through-flow region (14).

14. An arrangement (1) according to any one of claims 10 to 13, **characterised in that** the supporting material (3) is a material binding oxygen to itself, wherein it is preferably provided that the supporting material (3) has a higher oxygen affinity than the workpiece.

15. A method of sintering at least one, in particular dental, workpiece (2) with a sintering device (4) according to any one of claims 1 to 9, **characterised in that** the workpiece to be sintered is during the sintering procedure placed on the base surface (6) directly or with the interposition of a supporting material (3) and the protective gas coming from the gas feed (5) is, preferably solely, through the through-flow region (14) of the base surface (6) fed to the workpiece and/or introduced into the sintering cavity (18).

## Revendications

1. Dispositif de frittage (4) pour le frittage d'au moins une pièce (2), notamment dentaire, avec une chambre de frittage (18) destinée à recevoir la pièce (2) à fritter pendant le processus de frittage, ladite chambre de frittage (18) étant délimitée par une surface de base (6) du dispositif de frittage (4), ledit dispositif de frittage (4) comportant au moins une conduite d'amenée de gaz (5) destinée à amener un gaz protecteur dans la chambre de frittage (18), **caractérisé en ce que** la conduite d'amenée de gaz (5) est située sur le côté de la surface de base (6) opposé à la chambre de frittage (18), sur laquelle la pièce peut être déposée pendant le processus de frittage, et **en ce que** la surface de base (6) comporte au moins une zone de pénétration (14) perméable au gaz protecteur, permettant le refoulement dans la chambre de frittage (18) du gaz protecteur arrivant de la conduite d'amenée de gaz (5).

2. Dispositif de frittage (4) selon la revendication 1, **caractérisé en ce que**, dans une position de service pendant le processus de frittage, la surface de base (6) délimite la chambre de frittage (18) vers le bas, et **en ce que** la conduite d'amenée de gaz (5) est située en dessous de la surface de base (6).

3. Dispositif de frittage (4) selon la revendication 1 ou 2, **caractérisé en ce que** la conduite d'amenée de gaz (5) débouche préférentiellement dans une cavité (27) de répartiteur de gaz du dispositif de frittage (4), une couronne (26) de répartiteur de gaz étant intercalée, la cavité (27) de répartiteur de gaz étant située sur le côté de la surface de base (5) opposé à la chambre de frittage (18).

4. Dispositif de frittage (4) selon la revendication 2 et 3, **caractérisé en ce que**, dans la position de service pendant le processus de frittage, la cavité (27) de répartiteur de gaz est située en dessous de la surface de base (6).

5. Dispositif de frittage (4) selon l'une des revendications 1 à 4, **caractérisé en ce que** la zone de pénétration (14) dans la surface de base (6) est réalisée sous la forme d'au moins un orifice de passage (15), préférentiellement de plusieurs orifices de passage (15) dans la surface de base (6), et/ou au moins d'une zone poreuse (18) dans la surface de base (6).

6. Dispositif de frittage (4) selon l'une des revendications 1 à 5, **caractérisé en ce que** la surface de base (6) forme le fond d'un creuset de frittage (17) du dispositif de frittage (4) destiné à recevoir la pièce (2) à fritter pendant le processus de frittage.

7. Dispositif de frittage (4) selon la revendication 6, **caractérisé en ce que** la chambre de frittage (18) est l'intérieur du creuset de frittage (17).

8. Dispositif de frittage (4) selon l'une des revendications 1 à 7, **caractérisé en ce que**, dans une position de service pendant le processus de frittage, la chambre de frittage (18) est fermée en haut par un couvercle (19).

9. Dispositif de frittage (4) selon la revendication 8, **caractérisé en ce que** le couvercle (19) est étanche aux gaz ou présente au moins un orifice de passage (20), préférentiellement plusieurs orifices de passage (20), et/ou au moins une zone poreuse (21).

10. Agencement (1) avec au moins une pièce (2) à fritter, notamment dentaire, et un dispositif de frittage, **caractérisé en ce que** le dispositif de frittage est un dispositif de frittage (4) selon l'une des revendications 1 à 9, et **en ce que** la pièce est déposée sur la surface de base (6), directement ou avec intercalation d'un matériau de support (3), en particulier pendant le processus de frittage.

11. Agencement (1) selon la revendication 10, **caractérisé en ce que** le matériau de support (3) repose sur la surface de base (6) ou est intégré à celle-ci.

12. Agencement (1) selon la revendication 10 ou 11, **caractérisé en ce que** le gaz protecteur arrivant de la conduite d'amenée de gaz (5) peut être conduit vers la pièce (2) exclusivement en traversant le matériau de support (3).

13. Agencement (1) selon l'une des revendications 10 à 12, **caractérisé en ce que** le matériau de support (3) recouvre complètement la zone de pénétration (14) ou est disposé sur toute sa surface dans la zone de pénétration (14) ou forme toute la surface de la zone de pénétration (14).

14. Agencement (1) selon l'une des revendications 10 à 13, **caractérisé en ce que** le matériau de support (3) est un matériau liant l'oxygène en soi, le matériau de support (3) étant préférentiellement prévu présenter une affinité à l'oxygène supérieure à celle de la pièce.

15. Procédé de frittage d'au moins une pièce (2), notamment dentaire, avec un dispositif de frittage (4) selon l'une des revendications 1 à 9, **caractérisé en ce que** la pièce à fritter est déposée sur la surface de base (6), directement ou avec intercalation d'un matériau de support (3) pendant le processus de frittage, et **en ce que** le gaz protecteur arrivant de la conduite d'amenée de gaz (5) peut être conduit vers la pièce, de préférence exclusivement, en traversant la zone de pénétration (14) dans la surface de base (6), et/ou être introduit dans la chambre de frittage (18).
